# EUROPÄISCHE PATENTSCHRIFT

(11) **EP 0 949 775 B1**
(45) Veröffentlichungstag und Bekanntmachung des Hinweises auf die Patenterteilung: **01.08.2007**
(21) Anmeldenummer: 98121530.4
(22) Anmeldetag: 14.11.1998
(51) Int. Cl.: H04J 3/16, H04J 3/22

(54) **Verfahren und Anordnung zum Zuführen und Abzweigen von Audiosignalen am Netzübergang zwischen unterschiedlich genormten Nachrichtenübertragungssystemen**
Method and device for adding and dropping audio signals at the network transition between differently normed telecommunication systems
Méthode et arrangement pour insertion et extraction de signaux audio à la transition de réseau entre des systèmes de télécommunication de normes différentes

(30) Priorität: 14.11.1997 DE 19750431
(43) Veröffentlichungstag der Anmeldung: 13.10.1999
(73) Patentinhaber: AVT Audio Video Technologies GmbH, 90411 Nürnberg (DE)
(72) Erfinder: Hecht, Wilfried, Dipl.-Ing., 91257 Pegnitz (DE); Madinger, Robert, Dipl.-Ing., 91575 Windsbach (DE); Peters, Wolfgang Dipl.-Ing., 91054 Erlangen (DE)
(74) Vertreter: Dreykorn-Lindner, Werner

(56) Entgegenhaltungen:
- EP-A- 0 271 866
- EP-A- 0 677 962
- US-A- 4 631 720

## Beschreibung

Die Erfindung betrifft in erster Linie ein Verfahren zum Zuführen und Abzweigen von Audiosignalen am Netzübergang zwischen unterschiedlich genormten Nachrichtenübertragungssystemen (Oberbegriff des Patentanspruchs 1). Weiterhin betrifft die Erfindung eine Anordnung zum Zuführen und Abzweigen von Audiosignalen am Netzübergang zwischen unterschiedlich genormten Nachrichtenübertragungssystemen gemäß Patentanspruch 11.

Für die Nachrichtenübertragung sind unterschiedlich ausgestaltete Nachrichtenübertragungssysteme bekannt, wobei in der Regel in diesen Nachrichtenübertragungssystemen als Zuführungssysteme gleichartige Nachrichtenübertragungsnetze, z.B. 2 Mbit/s Netze, benutzt werden. Beispielsweise ist es bekannt, Audiosignale über 2 Mbit/s Satellitenstrecken zu terrestrischen Sendern zu verteilen. Neben der Ausgestaltung als gleichartige Netze sind diese Zuführungssysteme auch nur unidirektional gerichtet.

Die bestehende Infrastruktur heutiger Fernmeldenetze ist weitgehend genormt, so daß beim Aufbau neuer Netze oder Dienste oder der Weiterentwicklung von Einrichtungen, wie beispielsweise Coder/Decoder, Multiplexer/Demultiplexer, auf normgerechte Ausgestaltung zu achten ist. Ein Beispiel hierfür ist das weltweit im Aufbau befindliche ISDN-Netz für das nachfolgend die normgerechte Ausgestaltung der Coder/Decoder bzw. Multiplexer/Demultiplexer beschrieben ist.

Für die Digitalübertragung von Sprache über öffentliche Fernmeldenetze werden unter anderem sogenannte Audio- Codierer und -decodierer gemäß CCITT-Norm G.722 eingesetzt. Die Codierung nach CCITT-Norm G.722 beschreibt ein ADPCM-Verfahren (ADPCM, d.h. Adaptive Differential Pulse Code Modulation); um über einen 64.kbit/s- Kanal die Nutzinformation mit 7 kHz-Bandbreite zu übertragen. Die codierten Informationen werden bei Übertragungen in ISDN-Systemen mit Rahmenausrichtungs- und Bitratenzuordnungs- Informationen versehen, die der ITU-T J. 52 Recommendation entsprechen können. Gemäß dieser Empfehlung wird im Übertragungskanal jeweils für das Bit höchster Wertigkeit, das in der Empfehlung vorgegebene Signalisierungsbit eingesetzt.

Die ITU-T J. 52 Recommendation enthält die ITU-T Recommendation H.221 und H.224. Im einzelnen wird der Nutzdatenfluß (Summe der Nutzsignal-/Signalisierungsworte) gemäß der Empfehlung H.221 in Rahmen (frames) zu je 80 Oktetten unterteilt. Jeweils 16 aufeinanderfolgende Rahmen werden zu einem sogenannten Multirahmen (Multiframe) zusammengefaßt. Jeweils 80 Bits derselben Wertigkeit bilden in einem Rahmen einen Unterkanal (subchannel). Der Unterkanal der least significant bits wird als Servicekanal für die Bitratenzuordnungs-Informationen verwendet. In den Bits 1 bis 8 des Servicekanals wird das Rahmenausrichtungssignal (Frame Alignment Signal) angeordnet, während in den Bits 9 bis 16 des Servicekanals das Bitausrichtungssignal angeordnet wird. Die letzten 64 Bit stehen für einen Anwendungskanal (Application Channel) zur Verfügung.

Jeder Multirahmen ist in 8 Submultirahmen unterteilt. Es wird zwischen geraden Rahmen mit den Nummern 0, 2, ..., 14 und ungeraden Rahmen mit den Nummern 1, 3, .. .,15 unterschieden. Durch die sendeseitig benutzte Blockstruktur ergibt sich die Art der Information aus ihrer Position im Block. Dabei ist eine 3-Bit-Information im 10 Byte langen Administrations-Informations-Wort, beschrieben in der H.221-Empfehlung, die Rahmennummer.

ISDN-Netze sind nach den ITU ISDN-Empfehlungen der Reihe I.110 bis I.464 organisiert. Die aus den Normen sich ergebenden Rahmenbedingungen müssen also beachtet werden, wenn vom Dienste integrierenden Digitalnetz ISDN stammende Strukturen und Einrichtungen aller Art unverändert beibehalten werden sollen.

Beispielsweise ist aus der DE 39 42 275 C1 ein Verfahren zur übertragungstechnischen Integration von ISDN-Kanälen mit einem breitbandigen asynchronen Zeitmultiplex- Kanal auf der Anschlußleitung für digitale Kommunikations- Vermittlungsanlagen und daran angeschlossenen digital betriebenen Kommunikations- Endgeräten bekannt. Im Prinzip werden bei diesem Verfahren Signale unterschiedlicher Art und Rahmenstruktur zusammengefaßt (Multiplexer) und an einem Empfangsort wieder getrennt (Demultiplexer). Um nun ein zukünftiges Breitband- Kommunikationsnetz auf Basis des asynchronen Zeitmultiplexverfahrens aufbauen zu können und eine Kommunikation zwischen Endgeräten des Breitband-Kommunikationsnetzes und des Dienste integrierenden Digitalnetzes ISDN doppelt gerichtet stattfinden zu lassen, ist jeweils ein Anschlußorgan einer im asynchronen Zeitmultiplex arbeitenden ATM- Vermittlungsanlage mit einem zugeordneten Anschlußorgan einer ISDN- Vermittlungsanlage verbunden. In den ATM-Anschlußorganen wird durch Codeverletzung ein Kanalmultiplex aus ISDN-Kanälen, z. B. 4H1 + 2B + D16, den ATM- Daten zugeführt. Weiterhin werden von den ATM-Anschlußorganen ATM- und ISDN-Kanäle zusammen über Teilnehmeranschlußleitungen an besonders ausgebildete Netzabschlußeinrichtungen gesendet, die zum einen durch Codeverletzungsdetektion einen direkten Zugriff auf die ISDN- Kanäle durch Schmalbandendgeräte über normierte Schnittstellen erlauben, zum anderen mehrfach die genormte Breitbandschnittstelle zum Anschluß von Breitband- Endgeräten zur Verfügung stellen, wobei auch diesen Endgeräten durch Verletzung des für die SB-Schnittstelle genormten Leitungscodes, z. B. CMI, die ISDN-Kanäle angeboten werden. In umgekehrter Richtung werden in den Netzabschlußeinrichtungen die von den Breitband- Endgeräten kommenden ATM-Kanäle in einem ATM- Multiplexer durch Pufferung und gemäß einer bestimmten Zugriffsstrategie zu einem einzigen ATM- Kanal zusammengefügt.

Die Zeitmultiplexrahmen der durch Codeverletzung von den Breitband- Endgeräten sowie der über die genormten ISDN-Schnittstellen zur Netzabschlußeinrichtung in einem logischen Bus übertragenen ISDN-Kanäle, werden durch Laufzeitausgleich zeitlich in Übereinstimmung gebracht, was eine anschließende Überlagerung all dieser Multiplexrahmen, ähnlich dem Verfahren auf einer busfähigen SO-Schnittstelle, erlaubt. Für den geregelten Zugriff auf einen Signalisierungskanal wird der durch Überlagerung entstandene D- Kanal in einer D- Kanal- Erkennerschaltung aus dem Bitstrom in Richtung Vermittlungsstellle entnommen und als D- Echokanal in der Einfügeeinrichtung in den Schmalbandbitstrom zu allen Endgeräten eingefügt. In einer Netzabschlußeinrichtung werden die ISDN-Kanäle wiederum durch Codeverletzung in einer optischen oder elektrischen Übertragungseinrichtung den zusammengefügten ATM- Kanälen überlagert und gemeinsam zu dem zugehörigen Breitbandanschlußorgan der ATM- Vermittlungsanlage übertragen. Schließlich werden die in den ATM- Anschlußorganen ankommenden Datenströme durch Erkennung von Codeverletzungen in einen ATM- Kanal und entsprechende Anzahl von ISDN-Kanälen getrennt und den jeweils zuständigen Vermittlungseinrichtungen zugeleitet.

Ein weiteres Beispiel, wie auf bestehende Systeme und Netze zurückgegriffen werden kann, ist in der DE 195 24 113 C2 beschrieben und erläutert. Im Prinzip wird bei dem dort beschriebenen Verfahren zuerst gedemultiplext (ein Signal in vier Teilsignale zerlegt), dann übertragen und anschließend wieder gemultiplext. Dazu wird im Richtfunksystem innerhalb eines Regenerator- Abschnitts eines Übertragungsnetzes der synchronen digitalen Hierarchie, für die Übertragung von STM-4 strukturierten Signalen auf bereits bestehende Richtfunksysteme der niedrigsten Hierarchiestufe STM-1 zurückgegriffen. Die Übertragung der STM-4 strukturierten Signale erfolgt über vier für STM-1 strukturierte Signale ausgelegte Richtfunksysteme, wobei ein Byte Interleaved Demultiplexer einen zu sendenden STM-4 Signalrahmen in vier STM-1 Signalrahmen zerlegt und den vier STM-1 Richtfunksystemen zuteilt. Weiterhin ist ein Byte Interleaved Multiplexer vorgesehen, welcher vier empfangene STM-1 Signalrahmen, nach einer die unterschiedlichen Laufzeiten dieser vier STM-1 Signalrahmen ausgleichenden Synchronisation, zu einem Signalrahmen zusammenfügt. Schließlich ist ein RSOH- Prozessor vorhanden, welcher in dem vom Multiplexer erzeugten Signalrahmen (der neben einem Nutzsignalbereich einen Bereich für Steuerinformationen (Section Overhead) enthält, welcher in einen Regenerator Section Overhead und in einen Multiplex Section Overhead unterteilt ist) den Regenerator Section Overhead RSOH an die STM-4 Rahmenstruktur anpaßt.

Wenn zwei Systeme, Netzwerke oder Netze Informationen austauschen sollen, also zusammenarbeiten sollen, spricht man von "Interworking". Man kann dabei zwischen "Internetworking", der Verbindung verschiedener Netze, und "Serviceinterworking", der Konvertierung von Information eines Dienstes in einen anderen Dienst (eventuell eines anderen Netzes), unterscheiden. Will man unterschiedliche Netze miteinander verbinden, so hat man es mit beiden Fällen des Interworking zu tun. Aus der DE 41 23 851 C1 ist eine Anordnung zur Verbindung und Zusammenarbeit von unterschiedlichen Breitbandnetzen bekannt, von denen das erste Netz mit einem asynchronen Übertragungsverfahren (ATM = Asynchronous Transfer Mode) und das zweite Netz mit einem synchronen Übertragungsverfahren (STM = Synchronous Transfer Mode) arbeitet.

Im einzelnen ist die Anordnung sowohl mit Ortsvermittlungen oder Durchgangsvermittlungen als auch mit Verwaltungs- und Überwachungszentralen beider Netze verbunden. Weiterhin weist die Anordnung mindestens eine Kanaleinheit sowie eine Steuereinheit auf, welche die Kanaleinheit steuert. In jeder Kanaleinheit sind ein Multiplexer und ein Demultiplexer, ein Pufferspeicher und je ein Synchron/Asynchron und Asynchron/Synchron- Wandler für jedes Netz angeordnet.

Diese Multiplexer und Demultiplexer sind nötig, da in einem Übertragungskanal verschiedene Dienste oder Dienste- Komponenten in unterschiedlicher Zusammensetzung zu unterschiedlichen Zeiten übertragen werden können (insbesondere bei verschiedenen Netzen) und diese Dienste oder Dienste- Komponenten gegebenenfalls unterschiedlichen Codewandlungen oder Datenratenadaptierungen unterworfen werden müssen. In jeder Kanaleinheit sind deshalb Codewandler zur Wandlung von Bild- oder Ton- Daten zwischen zwei Normen und auch zur Datenratenadaptierung vorgesehen. Diese sind auf der VBN- Seite gemeinsam mit den entsprechenden Multiplexern bzw. Demultiplexern angeordnet. Weiterhin ist ein Wandler für die ATM/STM- Wandlung vorgesehen, die eine Signalpufferung in den Pufferspeichern erfordert.

Schließlich ist aus der EP-A-0 271 866 ein Übertragungssteuerungssystem für Unterraten-Multimediadaten zum Übertragen von Informationen wie Laufbildern, Sprache und Daten mit einer Unterrate bekannt. Dem Übertragungssteuerungssystem liegt dabei die Aufgabe zugrunde, die Synchronisationen des Fehlerkorrekturrahmens, des Sprachdatenrahmens und des Übertragungsrahmens gleichzeitig durch Verwendung einer einfachen Rahmenkonfiguration zu verwirklichen und die Multimediadaten mit einer Unterrate von 64 kbps x N, (N, ist eine Integerzahl und größer 1) mit einer befriedigend angepassten Operation zu multiplexen. Weiterhin soll das Übertragungssteuerungssystem ein adaptives Multiplexen mit Bezug auf die Übertragungsgeschwindigkeit und die Multiplexkonfiguration ausführen können, um Übertragungsleitungen effektiv zu nutzen.

Hierzu wird in der EP-A-0 271 866 ein Übertragungssteuerungssystem für Unterraten-Multimediadaten vorgeschlagen, in welchem Multimedia-Datenfolgen wie Bilddaten, Sprachdaten und externe digitale Daten gemultiplext und über eine Übertragungsleitung mit einer maximalen Übertragungsgeschwindigkeit von 64 kbps x N, (N, ist eine Integerzahl, die mindestens gleich 1 ist) gesendet werden, die eine geschwindigkeitsvariable Verbindung von 64 kbps x N₂ (N, > N₂ > 1) ermöglicht. Das Übertragungssteuerungssystem enthält einen Laufbildcodierer mit einem Pufferspeicher, wobei der Laufbildcodierer ein codiertes Ausgangssignal liefert, welches durch den Pufferspeicher in Bezug auf die Geschwindigkeit geglättet ist, einem Fehlerkorrekturcodierer zur Vornahme einer Fehlerkorrekturcodierung in dem Ausgangssignal des Laufbildcodierers, einem Sprachcodierer, einem Externdaten-Multiplexer zum Multiplexen externer digitaler Daten, einem Übertragungscontroller, und einem Multiplexer zum adaptiven Multiplexen der Bilddaten, der Sprachdaten von dem Sprachcodierer, der externen digitalen Daten von dem Externdaten-Multiplexer und Steuerdaten von dem Übertragungscontroller. Die für die Fehlerkorrekturcodierung vorgesehene, von dem Laufbildcodierer ausgegebene Bilddaten werden von einer Einheit für die Fehlerkorrektur-Codierbearbeitung aufgeteilt, eine Identifikationsinformation wird zum Identifizieren eines Typs der in der Einheit des Fehlerkorrektur-Codierbetriebes enthaltenen Bilddaten hinzugeführt, eine Bitgeschwindigkeit von 64 kbps x N wird als maximale Übertragungsgeschwindigkeit festgelegt und ein Übertragungsrahmen mit einer Länge von 8 Bits x N, Bits und einem Rahmenzyklus von 8 kHz wird als Basisrahmen gebildet. Die Fehlerkorrekturcodierung wird verwendet, um eine geschwindigkeitsvariable Verbindung von 64 kbps x N_{z} zu bewirken, die einen Unterkanalrahmen von 8 Bits x N₂ Bits durch Entfernen eines unbenutzten Unterkanals von 8 Bits x (N,-N₂) bildet. Weiterhin wird das Ausgangssignal des Laufbildcodierers in der Einheit der Fehlerkorrektur-Codierbearbeitung geteilt und durch die Identifikationsinformation ergänzt und geschwindigkeitsvariabel verbunden. Der Multiplexer ordnet durchgehend m (m ist eine Integerzahl, die mindestens gleich 1 ist) Bits einer Einheit mit 8 kbps zu, was einer Zuordnungsgeschwindigkeit für ein Bit in dem Übertragungsrahmen entspricht. Dadurch werden die Multimediadaten mit der Übertragungsgeschwindigkeit von m x 8 kbps angepasst und gemultiplext und in der Übertragungssteuerung werden Rahmenbits von I Bits (I ist eine Integerzahl, die nicht kleiner als 1 und nicht größer als 8 ist) zu 8 Bits zusammengefasst, um einen gültigen Datenrahmen im Fall von 64 kbps x 1 für einen Übertragungsrahmen von 8 Bits x N, Bits und in einem Vielfachrahmenzyklus mit J Übertragungsrahmen zu bilden. Als Protokollkanal werden Übertragungsgeschwindigkeits-Infonnation, Bitzuordnungsinformation und Steuerinformation und ähnliches allen k (k ist eine Integerzahl mindestens gleich 1) Vielfachrahmen im Zeitmultiplex zugeordnet, wodurch eine Rahmen/Vielfachrahmen-Synchronisation ohne Abhängigkeit von der Übertragungsgeschwindigkeit erreicht wird, um unter Verwendung der Protokollkanäle selbsttätig die Übertragungsgeschwindigkeit zu finden. Weiterhin ist eine Übertragungsrahmenkonfigurationssektion vorgesehen, in welcher die durch die Multimediadaten gebildeten Protokollkanäle angepasst und gemultiplext werden und Rahmenbits, die von der Übertragungssteuerung abgegeben werden und Bitzuordnungsinformationen enthalten, eingefügt werden. Schließlich wird das Rahmensynchronisationsmuster zum Sicherstellen der Rahmensynchronisation hinzugefügt und dadurch der Übertragungsrahmen gebildet. Demzufolge werden, in dem aus der EP-A-0 271 866 bekannten Übertragungssteuerungssystem für Unterraten-Multimediadaten, Bits einer Einheit eines Übertragungsrahmens mit einem Rahmenzyklus von 8 KHz zugeordnet, wobei der Vielfachrahmenzyklus mit dem Fehlerkorrekturrahmen und dem Sprachdatenrahmen übereinstimmt, die Bitbelegungs- und Zugriffsgeschwindigkeit sind, basierend auf den Übertragungsrahmenbits, adaptiv veränderbar und der Bilddatenrahmen wird in einer Einheit des Bildpaketes übertragen.

Der Erfindung liegt gegenüber dem beschriebenen Stand der Technik die Aufgabe zugrunde, ein Verfahren zum Zuführen und Abzweigen von Audiosignalen am Netzübergang zwischen unterschiedlich genormten Nachrichtenübertragungssystemen derart auszugestalten, dass Informationen, wie beispielsweise codierte Audiodaten von unterschiedlichen Netzen, unter Berücksichtigung der Multiplexstrukturen und Synchronisationsverfahren, die für die unterschiedlichen Netze erforderlich sind, ausgetauscht werden können. Weiterhin liegt der Erfindung die Aufgabe zugrunde, dass die Anordnung zur Realisierung des Verfahrens möglichst geringen Kostenaufwand erfordert Diese Aufgabe wird, ausgehend von einem Verfahren zum Zuführen und Abzweigen von Audiosignalen mit den Merkmalen im Oberbegriff des Patentanspruchs 1, dadurch gelöst, dass ein neues Sammelsignal, bestehend aus Original-Encoderdaten und Signalisierungsdaten, generiert und dieses den nachgeschalteten Einheiten zugeführt wird.

Das erfindungsgemäße Verfahren weist den Vorteil auf, dass auf überraschend einfache Art und Weise ein flexibles Audiozuführungssystem geschaffen wird, das die Übertragung von codierten Audiosignalen von unterschiedlichen Standorten über unterschiedlich geartete Netze zu einer zentralen Stelle ermöglicht, wobei diese Signale an der zentralen Stelle gesammelt und ein neues Sammelsignal bestehend aus den Einzelsignalen generiert, sowie Steuerinformationen von der zentralen Stelle über die Rückkanäle der Netze zu den Encodereinheiten gesendet werden. Trotz unterschiedlicher Multiplexstrukturen der unterschiedlichen Nachrichtenübertragungssysteme können die codierten Audiodaten (Anwendungsfall DAB) in die durch die Encoder erzeugten Formate zurückgewonnen werden, ohne die codierten Audiodaten verändern zu müssen und damit die durch die Encoder vorgegebene Qualität zu verändern. Ebenfalls können die Signalisierungsparameter der unterschiedlichen Nachrichtenübertragungssysteme analysiert, umgesetzt und für die weitere Übertragung benutzt werden. Das neu generierte Sammelsignal enthält somit die Original- Encoderdaten und Signalisierungsdaten. Für die nachgeschalteten Einheiten, welchen das Sammelsignal zugeführt wird, ist kein Unterschied zu erkennen, ob die Audiosignale lokal (am Ort der nachgeschalteten Einheit) codiert wurden oder über unterschiedliche Nachrichtenübertragungssysteme zugeführt wurden.

Weiterhin wird diese Aufgabe, ausgehend von einer Anordnung zum Zuführen und Abzweigen von Audiosignalen mit den Merkmalen im Oberbegriff des Patentanspruchs 10, dadurch gelöst, dass der 2 Mbit/s-Sammelmultiplexer ein neues Sammelsignal, bestehend aus Original-Encoderdaten und Signalisierungsdaten, generiert und dieses den nachgeschalteten Einheiten zuführt.

Diese erfindungsgemäße Ausgestaltung weist den Vorteil auf, dass ohne Änderung in der Struktur des Netzaufbaus unterschiedlich genormte Nachrichtenübertragungssysteme zusammenarbeiten können und dabei die normgemäßen Anforderungen berücksichtigt werden können, ohne dass die Informationen transcodiert (entsprechender Qualitätsverlust) werden müssen. Durch die Verwendung von datenreduzierenden Codern ist eine Übertragung von Audiosignalen über unterschiedliche Netze wie ISDN, X.21 und 2Mbit/s möglich.

In Weiterbildung der Erfindung nach Patentanspruch 2, sind in den genormten Nachrichtenübertragungssystemen angeordnete Netzzugangsmultiplexer und Encoder für die Audiosignale über Rückkanäle des Nachrichtenübertragungssystems, welche durch die Netzzugangsdemultiplexer geführt sind, mittels der Steuereinrichtung jeweils fernkonfigurierbar und/oder ferndiagnostizierbar. Diese Weiterbildung weist den Vorteil auf, dass die Steuereinrichtung mit jeder Einrichtung des Zuführungsnetzes kommunizieren kann, beispielsweise können die Parameter von Encoder z.B. Datenrate, Codieralgorithmus, Abtastfrequenz somit auf einfache Weise umkonfiguriert werden. Weiterhin können von einer zentralen Stelle aus, die Kapazitäten für die Übertragung von Zusatzdaten zu den Audiodaten erhöht oder verkleinert werden. Ebenfalls können die im Zuführungsnetz enthaltenen Elemente diagnostiziert werden. Schließlich können durch die Möglichkeit der Einstellung der Betriebsarten, Kundenwünsche an den Netzwerkbetreiber berücksichtigt werden, beispielsweise zu Nachtzeiten Reduzierung der Audio- Bitrate und unter Inkaufnahme einer Verschlechterung der Audioqualität und dafür Nutzung freier Übertragungskapazitäten zur Datenübertragung.

Bei einer Ausgestaltung der Erfindung gemäß Patentanspruch 3, handelt es sich bei den Netzzugangs - Multiplexsignalen um ISDN-Signale, X.21-Signale und 2 Mbit/s-Signale (nach ITU-T Rec. G.703/G.704), mit einer für die jeweilige Signalart eigenen Multiplexstruktur. Bei dieser Ausgestaltung kann auf einfache Art und Weise normgerecht der Rückkanal realisiert werden. Die Signale der Steuereinrichtung werden vom jeweiligen Demultiplexer in ITU-T Rec. J. 52 korrespondierende Signalisierungsinformationen konvertiert.

In Weiterbildung der Erfindung nach Patentanspruch 4 ist vorgesehen, dass die Netzzugangsdemultiplexer diese unterschiedlichen Signale empfangen, demultiplexen und jeweils als Digitalsignal dem nachgeschalteten 2 Mbit/s-Sammelmultiplexer zuführen. Diese Weiterbildung weist den Vorteil auf, dass keine Transcodierung notwendig ist und das Digitalsignal unverändert weitergeleitet werden kann.

Vorzugsweise enthalten, gemäß Patentanspruch 5, die Multiplexsignale der Netzzugangsmultiplexer neben den codierten Audiodaten auch Signalisierungsdaten über die Encoder - Einstellungen und Synchronisationsdaten für die unterschiedlich genormten Nachrichtenübertragungsnetze, die von den Netzzugangsdemultiplexern analysiert werden. Bei diesem Verfahren wird auf einfache Art und Weise, die für die Auswertung der Datensignale benötigte Synchronisierungsinformation erhalten.

In Ausgestaltung der Erfindung nach Patentanspruch 6 werden, abhängig von der Analyse, im Netzzugangsdemultiplexer die Encoder - Daten um neu aufbereitete Encoder- Signalisierungsdaten ergänzt und über einen Bus dem 2 Mbit/s-Sammelmultiplexer zugeführt. Diese Ausgestaltung weist den Vorteil auf, daß diese Signalisierungsdaten als Grundlage für die neu zu bildenden Signalisierungsdaten für das 2 Mbit/s- Sammelmultiplexsignal verwendet werden können.

In Weiterbildung der Erfindung nach Patentanspruch 7 ist vorgesehen, dass der 2 Mbit/s-Sammelmultiplexer die Datensignale um eine neu generierte Signalisierungsinformation, welche die neue Multiplexstruktur und die Signalisierungsdaten über die Encoder - Einstellungen enthält, ergänzt und dass das Ausgangssignal des 2 Mbit/s-Sammelmultiplexers über öffentliche genormte Nachrichtenübertragungsnetze übertragen wird. Diese Weiterbildung weist den Vorteil auf, dass für nachfolgende Einheiten diese neu generierte Signalisierungsinformation als Grundlage dienen kann, um die zugeführten Signale eindeutig identifizieren zu können. Zudem kann auf besonders einfache Art und Weise die Einbindung erfolgen.

Bei einer bevorzugten Ausgestaltung der Erfindung gemäß Patentanspruch 8, prüfen die Netzzugangsdemultiplexer permanent aktiv die ISDN- X.21- und 2 Mbit/s- - Leitungen und lösen bei Ausfall dieser Leitungen automatisch Backup- Schaltungen über ISDN- Wählleitungen aus. Bei dieser Ausgestaltung wird die Netzsicherheit durch die Möglichkeit verbessert, Ersatzschaltungen bei Verlust der Übertragungssignale in den Netzzugangsmultiplexern von der Steuereinrichtung auszulösen. Als Ersatzstrecken für die 2 Mbit/s, ISDN und X.21 Strecken können ISDN Wählstrecken benutzt werden. Die Netzwerktopologie und Steuerung ist identisch mit der ISDN- Lösung und verbessert die Verfügbarkeit der AudioÜbertragung erheblich.

Sind gemäß Patentanspruch 9, die Netzzugangsdemultiplexer mit dem 2 Mbit/s-Sammelmultiplexer über einen Bus miteinander verbunden, so sind keine einzelnen Steuerleitungen zu allen Netzzugangsdemultiplexern zu führen. Dabei kann auf standardmäßige Busprotokolle und kostengünstige IC's zurückgegriffen werden.

In Weiterbildung der Erfindung, gemäß Patentanspruch 11, sind die Netzzugangsdemultiplexer mit dem 2 Mbit/s-Sammelmultiplexer über einen Bus miteinander verbunden und die Netzzugangsmultiplexer und Netzzugangsdemultiplexer sind zusätzlich für die Backup- Schaltung mit ISDN-Modulen bestückt. Diese Weiterbildung weist den Vorteil auf, dass für die Backup-Lösung keine separaten Netzzugangsdemultiplexer benötigt werden, sondern diese nur durch ISDN-Module erweitert werden müssen.

Vorzugsweise kann, gemäß Patentanspruch 12, über die an den 2 Mbit/s-Sammelmultiplexer angeschlossene Steuereinrichtung der 2 Mbit/s-Sammelmultiplexer konfiguriert und diagnostiziert werden. Diese Ausgestaltung der Erfindung weist den Vorteil auf, dass auf einfache Art und Weise gleiche Informationen an alle Netzzugangsmultiplexer bzw. Netzzugangsdemultiplexer gesendet werden kann.

Schließlich sind, gemäß Patentanspruch 13, über den Verbindungsweg 2 Mbit/s-Sammelmultiplexer, Bus, Netzzugangsdemultiplexer und Rückkanäle der öffentlichen Nachrichtenübertragungsnetze die Netzzugangsmultiplexer und Encoder fernkonfigurierbar und ferndiagnostizierbar. Mit dieser Anordnung kann der Netzbetreiber von einer zentralen Stelle aus, die Encoder beim Anwender entsprechend umkonfigurieren (z.B. Erhöhen der Datenrate und Verminderung der Audiodaten) und Wartungsdienste vornehmen.

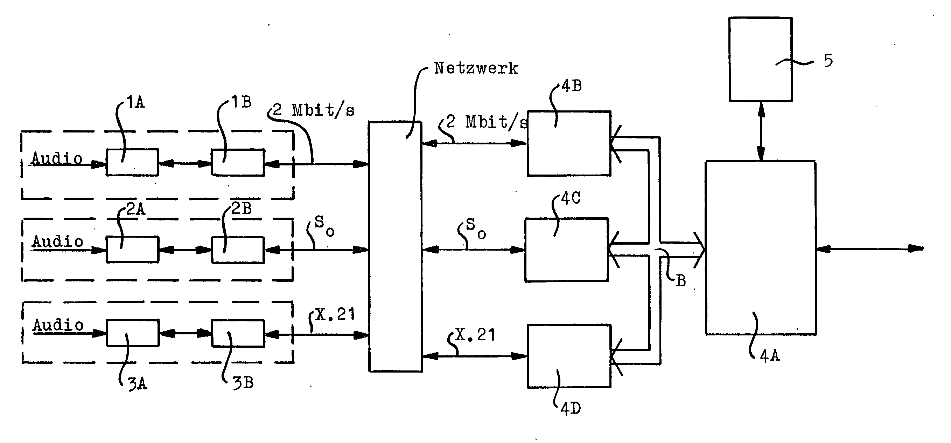

Weitere Vorteile und Einzelheiten lassen sich der nachfolgenden Beschreibung einer bevorzugten Ausführungsform der Erfindung unter Bezugnahme auf die Zeichnung entnehmen.

Wie die einzige Figur zeigt, besteht das flexible Audiozuführungssystem aus drei identischen Codern 1A, 2A, 3A, drei unterschiedlichen Netzzugangsmultiplexern 1B, 2B, 3B, drei Netzzugangsdemultiplexern 4B, 4C, 4D, einem 2Mbit/s Sammelmultiplexer 4A und einer Steuereinrichtung 5.

Den Codern 1A, 2A, 3A werden Audiosignale zugeführt. Die codierten Audiosignale gelangen zu den Netzzugangsmultiplexern 1B, 2B, 3B, die entsprechend der netzabhängigen Multiplexstruktur die codierten Audiosignale um Signalisierungsinformationen ergänzen. Abhängig vom Netzzugang verpacken die Netzzugangsmultiplexer 1B, 2B, 3B die codierten Audiosignale in 64 kbit/s Pakete.

Der Netzzugangsmultiplexer 1B für ISDN-Netze ergänzt alle 64 kbit/s Pakete um Zusatzinformationen, die für die Synchronisation im Netzzugangsdemultiplexer 4B erforderlich sind. Hierfür belegen die codierten Audiosignale nicht die kompletten 64 kbit/s eines 64 kbit/s Paketes, sondern es wird Platz für diese Daten pro Paket freigehalten. Um n x 64 kbit/s Audiodaten übertragen zu können, werden (n+1) x 64 kbit/s Pakete benötigt (n = 1, ....... , 6). Dieses Synchronisationsverfahren ist in der ITU-T Rec. J.52 für Audioübertragung in ISDN-Netzen beschrieben. Die Synchronisationsdaten sind pro 64 kbit/s Paket erforderlich, da bei der Übertragung im ISDN- Netz Laufzeitunterschiede (Delays) zwischen den 64 kbit/s Paketen auftreten können. Dieser Delay kann durch unterschiedliches Routen der 64 kbit/s Pakete im Netz entstehen. Der zugehörige Netzzugangsdemultiplexer 4B synchronisiert die (n+1) Pakete und reduziert die Datenmenge zu n Paketen, d.h filtert die Synchronisationsdaten, analysiert die Signalisierungsdaten und stellt die Daten dem 2Mbit/s Sammelmultiplexer 4A über einen Bus B mit den extrahierten SignalisierungsInformationen zur Verfügung.

Die codierten Audiodaten des Coders 2A werden dem Netzzugangsmultiplexer 2B zugeführt Dieser setzt die für 2 Mbit/s Netze erforderlichen Synchronisations- - Informationen entsprechend ITU-T Rec. J.52 im Zeitschlitz 1 des 2 Mbit/s Signals ein.

Die codierten Audiodaten füllen die weiteren Zeitschlitze des 2Mbit/s Signals. Die Sychronisationsdaten enthalten Informationen für den Netzzugangsdemultiplexer 4C unter anderem über die Anzahl der mit Audiosignalen belegten Zeitschlitze des 2 Mbit/s Signals. Der Netzzugangsdemultiplexer 4C analysiert die Synchronisationsdaten und überträgt die codierten Audiodaten mit den dazugehörigen Signalisierungs- Informationen zum 2 Mbit/s Sammelmultiplexer 4A.

Für die Übertragung über X.21-Netze werden die codierten Audiodaten des Coders 3A dem Netzzugangsmultiplexer 3B zugeführt. Dieser erweitert die n x 64 kbit/s codierten Audiodaten um ein 64 kbit/s Datenpaket für Synchronisationszwecke zu (n+1) x 64 kbit/s Datenpaketen. In diesem Erweiterungspaket werden auch Signalisierungsdaten nach ITU-T Rec. J.52 eingesetzt. Diese beschreiben die Einstellungen des Encoders 3A und des Netzzugangsmultiplexers 3B. Der Netzzugangsdemultiplexer 4D sucht im kompletten Datenstrom bit- orientiert nach den Synchronisationsdaten. Nach Auffinden der Synchronisationsdaten kann das 64 kbit/s Zusatzdatenfeld identifiziert werden und der Netzzugangsdemultiplexer 4D kann die Reihenfolge der 64 kbit/s Pakete der Encoder erkennen. Nach Analyse der Signalisierungs- Informationen und dem Filtern der Daten des Zusatzpaketes, werden die Encoderdaten mit den zugehörigen Signalisierungsdaten über den Bus B dem 2 Mbit/s Sammelmultiplexer 4A zugeführt Über die X.21-Schnittstelle können Encoderdaten von 64 kbit/s bis 1920 kbit/s übertragen werden.

Die codierten Audiodaten der Encoder 1B, 2B, 3B mit den zugehörigen Signalisierungs- Informationen werden von den Netzzugangsdemultiplexern 4B, 4C und 4D dem 2Mbit/s Sammelmultiplexer 4A zugeführt. Der 2 Mbit/s Sammelmultiplexer 4A generiert ein neues 2 Mbit/s Signal nach ITU-T Rec. G.703, G.704 und füllt ab Zeitschlitz 2 die Zeitschlitze mit aufsteigender Reihenfolge mit den 64 kbit/s Audiodaten- Paketen der Coder 1A, 2A, 3A.

Im Zeitschlitz 1 werden zusätzlich die Signalisierungs- Informationen der Coder 1A, 2A, 3A eingeblendet. Die dem 2 Mbit/s Sammelmultiplexer 4A nachgeschalteten Einheiten erhalten somit alle notwendigen Informationen über die codierten Audiosignale.

Die erfindungsgemäße Kombination aus Sammeln von über unterschiedliche Netze zugeführten Audiodaten an einer zentralen Stelle und Fernsteuerung der gesamten Einrichtungen im Nachrichtenübertragungsnetz, nämlich der Coder 1A, 2A, 3A, der Netzzugangsmultiplexer 1B, 2B, 3B, der Netzzugangsdemultiplexer 4B, 4C, 4D und des 2 Mbit/s Sammelmultiplexers 4A, ermöglicht ein hohes Maß an Flexibilität und gewährleistet zugleich hohe Betriebssicherheit der miteinander kommunizierenden Nachrichtenübertragungssysteme (Backup- Lösung).

Mit der am 2 Mbit/s Sammelmultiplexer 4A angeschlossenen Steuereinrichtung 5 erfolgt die gesamte Steuerung. Die Steuerkommandos der Steuereinrichtung 5 werden dem 2 Mbit/s Sammelmultiplexer 4A zugeführt. Über ein Adreßfeld kann der 2 Mbit/s Sammelmultiplexer 4A erkennen, welches Element des Zuführungssystems adressiert werden soll. Abhängig von der Adresse, generiert der 2 Mbit/s Sammelmultiplexer 4A ein entsprechendes Telegramm und sendet es über den Bus B zu den Netzzugangsdemultiplexern 4B, 4C, 4D. Soll z.B. einer der Encoder 1A, 2A, 3A gesteuert werden, konvertiert der zugehörige Netzzugangsdemultiplexer 4B, 4C, 4D die Steuerzeichen in ein nach J.52 korrespondierendes Kommando und setzt dieses, entsprechend dem Netzzugang, in ein für ISDN-Netze, 2 Mbit/s Netze oder X.21 Netze vorgesehenes 64 kbit/s Paket ein. Die Multiplexstruktur des 64 kbit/s Paketes ist identisch mit der Multiplexstruktur des 64 kbit/s Paketes der Gegenrichtung.

Die Netzzugangsmultiplexer 1B, 2B, 3B werten die empfangenen Signalisierungsdaten der Netzzugangsdemultiplexer 4B, 4C, 4D aus und steuern entsprechend die Coder 1A, 2A, 3A. Die Ergebnisse der Steuervorgänge werden von den Codern 1A, 2A, 3A den Netzzugangsmultiplexern 1B, 2B, 3B zugeführt. Diese verpacken, wie bereits oben beschrieben, diese Informationen in ein dafür vorgesehenes 64 kbit/s Paket nach ITU-T Rec. J.52 und übertragen die Daten zu den Netzzugangsdemultiplexern 4B, 4C, 4D und weiter zum 2 Mbit/s Sammelmultiplexer 4A und schließlich zur Steuereinrichtung 5. Die Steuereinrichtung 5 kann über die beschriebene Prozedur mit jeder Einrichtung des Zuführungsnetzes kommunizieren. Die Parameter der Encoder 1A, 2A, 3A z.B. Datenrate, Codieralgorithmus, Abtastfrequenz können somit auf einfache Weise umkonfiguriert werden. Weiterhin können die Kapazitäten für die Übertragung von Zusatzdaten zu den Audiodaten erhöht oder verkleinert werden. Ebenfalls können die im Zuführungsnetz enthaltenen Elemente diagnostiziert werden.

Eine weitere wichtige Funktion stellt die Möglichkeit dar, Ersatzschaltungen bei Verlust der Übertragungssignale in den Netzzugangsmultiplexern 4B, 4C, 4D von der Steuereinrichtung 5 auszulösen. Als Ersatzstrecken für die 2 Mbit/s, ISDN und X.21 Strecken können ISDN Wählstrecken benutzt werden. Die Netzwerktopologie und Steuerung ist identisch mit der ISDN Lösung.

Die Erfindung ist nicht auf das dargestellte Ausführungsbeispiel für DAB (Digital Audio Broadcasting) beschränkt. Es ist beispielsweise im Rahmen der Erfindung denkbar, dieses System
- bei einem Breitbandinformationssystem für Verteildienste und interaktive Dienste (Pay per view, Pay TV, Video on demand o.ä.)
- bei einem Richtfunkssystem oder bei einem Funkübertragungssystem (ÖBL, NÖBL, Bündelfunknetze wie Chekker usw.)
- bei einem Weitverkehrsnetz, WAN genannt (Wide Area Network), bei dem die einzelnen Teilnehmer örtlich soweit voneinander entfernt sind, daß sie für die Datenübertragung öffentliche Dienste (z. B. das nationale/internationale Fernsprechnetz und/oder Satelliten) in Anspruch nehmen müssen
- bei einem Mailbox-System, (reservierter Speicherbereich in einem Netzwerk), bei dem z.B. audiovisuelle Informationen, Texte, Grafiken, oder ausführbare Programme in der Mailbox mit exakt definierten Zugriffsrechten hinterlegt werden und ein Teilnehmer mit den entsprechenden Zugriffsrechten die hinterlegten Informationen abrufen kann (neben privaten Nachrichten, die nur von entsprechend autorisierten Personen gelesen werden können, gibt es auch allgemein zugängliche öffentliche Informationen, die in sogenannten "Schwarzen Brettern" stehen und nach verschiedenen Themenbereichen geordnet sind)
- bei Multimedia-Anwendungen, d.h. gemeinsame Verwendung verschiedener statischer (Text, Foto, Grafik) und dynamischer (Audio, Animation und Video) Medientypen mit der Möglichkeit der interaktiven Nutzung, d. h. der Nutzer ist nicht nur Empfänger, sondern kann selbst über entsprechende Rückkanäle Inhalte abrufen und verändern bzw. Aktionen auf Basis von Verfahren zur Datenkomprimierung, Massenspeicher und Übertragungskanäle hoher Bandbreite (sogenannte Datenautobahnen) für vernetzte Anwendungen auslösen
usw. einzusetzen und mit geringem Schaltungsaufwand das Abzweigen und Einfügen aller Nachrichtenübertragungskanäle in beiden Richtungen zu ermöglichen.

## Patentansprüche

1. Verfahren zum Zuführen und Abzweigen von Audiosignalen am Netzübergang zwischen unterschiedlich genormten, jedoch gleichartigen, synchronen Nachrichtenübertragungssystemen, bei dem am Netzübergang, die aus mindestens zwei gleichartigen, synchronen Nachrichtenübertragungssystemen stammenden und am Ausgang eines Encoders (1A, 2A, 3A) anstehenden codierten Audiosignale über jeweils einen Netzzugangsdemultiplexer (4B, 4C, 4D) gleichzeitig einem einzigen Sammelmultiplexer (4A) zugeführt werden,
bei dem der Sammelmultiplexer (4A) die normgerechten mit Zusatzinformation ergänzten Signale sammelt, diese synchronisiert und in ein einziges normgerechtes Multiplexsignal umsetzt und
bei dem der Sammelmultiplexer (4A) ebenso wie die Netzzugangsdemultiplexer (4B, 4C, 4D) mittels einer Steuereinrichtung (5) fernkonfigurierbar und/oder ferndiagnostizierbar ist,
**dadurch gekennzeichnet,**
**dass** ein neues Sammelsignal, bestehend aus Original-Encoderdaten und Signalisierungsdaten, generiert und dieses dem Sammelmultiplexer (4A) nachgeschalteten Einheiten zugeführt wird.

2. Verfahren nach Anspruch 1, **dadurch gekennzeichnet, dass** in den genormten Nachrichtenübertragungssystemen angeordnete Netzzugangsmultiplexer (1B, 2B, 3B) und Encoder (1A, 2A, 3A) für die Audiosignale, mittels der Steuereinrichtung (5) über Rückkanäle des Nachrichtenübertragungssystems, welche durch die Netzzugangsdemultiplexer (4B, 4C, 4D) geführt sind, jeweils fernkonfigurierbar und/oder ferndiagnostizierbar sind.

3. Verfahren nach Anspruch 1 oder 2, **dadurch gekennzeichnet, dass** es sich bei den Netzzugangs-Multiplexsignalen um ISDN-Signale, X.21-Signale und 2 Mbit/s-Signale (nach ITU-T Rec. G.703/G.704) handelt, mit einer für die jeweilige Signalart eigenen Multiplexstruktur.

4. Verfahren nach Anspruch 3, **dadurch gekennzeichnet, dass** die Netzzugangsdemultiplexer (4B, 4C, 4D) diese unterschiedlichen Signale empfangen, demultiplexen und jeweils als Digitalsignal dem nachgeschalteten 2 Mbit/s-Sammelmultiplexer (4A) zuführen.

5. Verfahren nach Anspruch 2, **dadurch gekennzeichnet, dass** die Multiplexsignale der Netzzugangsmultiplexer (1B, 2B, 3B) neben den codierten Audiodaten auch Signalisierungsdaten über die Encoder-Einstellungen (1A, 2A, 3A) und Synchronisationsdaten für die unterschiedlich genormten Nachrichtenübertragungsnetze enthalten, die von den Netzzugangsdemultiplexern (4B, 4C, 4D) analysiert werden.

6. Verfahren nach Anspruch 5, **dadurch gekennzeichnet, dass**, abhängig von der Analyse, im Netzzugangsdemultiplexer (4B, 4C, 4D) die Encoder - Daten (1A, 2A, 3A) um neu aufbereitete Encoder- Signalisierungsdaten ergänzt und über einen Bus (B) dem 2 Mbitls-Sammelmultiplexer (4A) zugeführt werden.

7. Verfahren nach Anspruch 6, **dadurch gekennzeichnet, dass** der 2 Mbit/s-Sammelmultiplexer(4A) die Datensignale um eine neu generierte Signalisierungsinformation, welche die neue Multiplexstruktur und die Signalisierungsdaten über die Encoder-Einstellungen (1A, 2A, 3A) enthält, ergänzt und dass das Ausgangssignal des 2 Mbit/s-Sammelmultiplexers (4A) über öffentliche genormte Nachrichtenübertragungsnetze übertragen wird.

8. Verfahren nach Anspruch 3, **dadurch gekennzeichnet, dass** die Netzzugangsdemultiplexer (4B, 4C, 4D) permanent aktiv die ISDN- X.21- und 2 Mbit/s-Leitungen prüfen und bei Ausfall dieser Leitungen automatisch Backup-Schaltungen über ISDN- Wählleitungen auslösen.

9. Verfahren nach Anspruch 1, **dadurch gekennzeichnet, dass** von der Steuereinrichtung (5) zu den Encodem (1A, 2A, 3A) Schaltinformationen zur Erzeugung unterschiedlicher Datenraten für ein codiertes Audiosignal übertragen werden.

10. Anordnung zum Zuführen und Abzweigen von Audiosignalen am Netzübergang zwischen unterschiedlich genormten, jedoch gleichartigen, synchronen Nachrichtenübertxagungssystemen mit
mindestens einem Encoder datenreduzierenden (1A, 2A, 3 A), an dem eine Audioquelle anschließbar ist,
einem Netzzugangsmultiplexer (1B, 2B, 3B), mit dem die Encoderdaten am Ausgang des Encoders (1A, 2A, 3A) einem öffentlichen Nachrichtenübertragungsnetz zuführbar sind,
mindestens einem Netzzugangsdemultiplexer (4B, 4C, 4D), der an das öffentliche Nachrichtenübertragungsnetz angeschlossen ist,
einem dem Netzzugangsdemultiplexer (4B, 4C, 4D) nachgeschalteten 2 Mbit/s - Sammelmultiplexer (4A) zum Generieren eines neuen 2 Mbit/s- Datenstromes aus den mit Zusatzinformationen ergänzten Daten der Netzzugangsmultiplexer (1B, 2B, 3B) und einer Steuereinrichtung (5), welche zur Einstellung der Betriebsarten eines flexiblen Audiozuführungssystems mit dem 2 Mbit/s-Sammelmultiplexer (4A) verbunden ist,
**dadurch gekennzeichnet,**
**dass** der 2 Mbit/s-Sammelmultiplexer (4A) ein neues Sammelsignal, bestehend aus Original-Encoderdaten und Signalisierungsdaten, generiert und dieses dem 2 Mbit/s- Sammelmultiplexer (4A) nachgeschalteten Einheiten zuführt.

11. Anordnung nach Anspruch 10, **dadurch gekennzeichnet, dass** die Netzzugangsdemultiplexer (4B, 4C, 4D) mit dem 2 Mbit/s-Sammelmultiplexer (4A) über einen Bus (B) miteinander verbunden sind und dass die Netzzugangsmultiplexer (1B, 2B, 3B) und Netzzugangsdemultiplexer (4B, 4C, 4D) zusätzlich für die Backup- Schaltung mit ISDN-Modulen bestückt sind.

12. Anordnung nach Anspruch 10, **dadurch gekennzeichnet, dass** über die an den 2 Mbit/s-Sammelmultiplexer (4A) angeschlossene Steuereinrichtung (5), der 2 Mbit/s-Sammelmultiplexer (4A) konfiguriert und diagnostiziert werden kann.

13. Anordnung nach einem oder mehreren der Ansprüche 10 bis 12, **dadurch gekennzeichnet, dass** über den Verbindungsweg 2 Mbit/s-Sammelmultiplexer (4A), Bus (B), Netzzugangsdemultiplexer (4B, 4C, 4D) und Rückkanäle der öffentlichen Nachrichtenübertragungsnetze die Netzzugangsmultiplexer (1B, 2B, 3B) und Encoder (1A, 2A, 3A) fernkonfigurierbar und ferndiagnostizierbar sind.

## Claims

1. A method for supplying and branching audio signals at the network node between differently standardized but similar, synchronous transmission systems, wherein at the network node coded audio signals originating from at least two similar, synchronous transmission systems and available at an output of an encoder (1A, 2A, 3A) are transmitted via one of several network access demultiplexers (4B, 4C, 4D) and fed simultaneously to a single collective multiplexer (4A),
- wherein said collective multiplexer (4A) collects said standardized signals supplemented with additional information, synchronizes these and converts them into a single standardized multiplexed signal and
- wherein said collective multiplexer (4A) as well as said network access demultiplexers (4B, 4C, 4D) can be remotely configured and/or diagnosed via a control equipment (5),
**characterised in that** a new collective signal, comprising of original encoded data and signaling data is generated and said signal is fed to modules that are connected downstream of said collective multiplexer (4A).

2. The method according to claim 1, wherein said network access multiplexers (1B, 2B, 3B) and said encoders (1 A, 2A, 3A) for said audio signals located in said standardized transmission systems can each remotely configured and/or diagnosed by said control equipment (5) via back channels of said transmission systems that are passed through said network access demultiplexers (4B, 4C, 4D).

3. The method according to claim 1 or 2, wherein said network access multiplexed signals are ISDN signals or X.21 signals or 2-Mbit/s signals (according to ITU-T Rec. G J03/G.704) with their own multiplex structure according to each type of said signal.

4. The method according to claim 3, wherein said network access demultiplexers (4B, 4C, 4D) comprises following steps: receiving said different signals, demultiplexing said different signals and feeding each of said different signals as digital signals to said following 2-Mbit/s collective multiplexer (4A).

5. The method according to claim 2, wherein said multiplexed signals of said network access multiplexers (1B, 2B, 3B) in addition to said encoded audio data also contain signaling data for setting each of that encoders (1 A, 2A, 3A) and data for synchronizing for said differently standardized transmission systems that are analyzed by said network access demultiplexers (4B, 4C, 4D).

6. The method according to claim 5, wherein depending of said analysis, said data from said encoders (1A, 2A, 3A) in said network access demultiplexers (4B, 4C, 4D) is supplemented with newly generated encoder signaling data and fed to said 2-Mbit/s collective multiplexer (4A) via a bus (B).

7. The method according to claim 6, wherein said 2-Mbit/s collective multiplexer (4A) supplements said data signals with newly generated signaling information that signaling information contains said new multiplex structure and said signaling data for said encoder settings (1 A, 2A, 3A), and that said output signal of said 2-Mbit/s collective multiplexer (4A) is transmitted over public standardized transmission systems.

8. The method according to claim 3, wherein said network access demultiplexers (4B, 4C, 4D) permanently and actively checks said ISDN or X.21 or 2-Mbit/s lines and in the event of a failure of said lines automatically trigger backup-switching to ISDN dial-up lines.

9. The method according to claim 1, wherein switching information to generate different data rates for an encoded audio signal are transmitted from said control equipment (5) to said encoders (1 A, 2A, 3A).

10. An arrangement for supplying and branching audio signals at the network node between differently standardized, but similar, synchronous transmission systems comprising:
- at least one data compression encoder (1A, 2A, 3A) to which an audio source can be connected,
- a network access multiplexer (1B, 2B, 3B) at which said encoded data at the output of said encoders (1 A, 2A, 3A) can be fed to a public transmission network,
- at least one network access demultiplexer (4B, 4C, 4D) that is connected to said public transmission network,
- a 2-Mbit/s collective multiplexer (4A) that is connected downstream of said network access demultiplexer (4B, 4C, 4D) to generate a new 2-Mbit/s data stream comprising said network access multiplexers (1B, 2B, 3B) data and a control equipment (5) data supplemented with additional data that is connected to said 2-Mbit/s collective multiplexer (4A) to set operating modes of a flexible audio contribution system,
**characterized in that** said 2-Mbit/s collective multiplexer (4A) generates a new multiplexed signal comprising said original encoder data and signaling data and feeds this multiplexed signal to modules that are connected downstream of said 2-Mbit/s collective multiplexer (4A).

11. The arrangement according to claim 10, wherein said network access demultiplexers (4B, 4C, 4D) are connected with the 2-Mbit/s collective multiplexer (4A) via a bus (B) and that said network access multiplexers (1B, 2B, 3B) and said network access demultiplexers (4B, 4Q, 4D) are additionally equipped with ISDN modules for a backup-switching.

12. The arrangement according to claim 10, wherein said 2-Mbit/s collective multiplexer (4A) can be configured and diagnosed via said control equipment (5) that is connected to said 2-Mbit/s collective multiplexer (4A).

13. The arrangement according to one or more of the claims 10 to 12, wherein via the link: said 2-Mbit/s collective multiplexer (4A), said bus (B), said network access demultiplexers (4B, 4C, 4D) and said back channels of said public transmission network said network access multiplexers (1B, 2B, 3B) and encoders (1A, 2A, 3A) can be remotely configured and diagnosed.

## Revendications

1. Procédé d'admission et de dérivation des signaux audio au passage d'un réseau à un autre avec des systèmes de transmission d'informations de différentes normes mais de même type et de manière synchrone, où au passage de réseau les signaux audio codés étant à la sortie d'un encodeur (1A, 2A, 3A) et provenant au moins de deux pareils systèmes de transmission d'informations synchrones et étant menés par un démultiplexeur d'accès au réseau (4B, 4C, 4D) respectivement et en même temps par un unique multiplexeur sommateur (4A)
- dans lequel le multiplexeur sommateur (4A) recueille les signaux conformément aux normes étant complétés avec des informations complémentaires il les synchronise et les convertit en un seul signal multiplexé conformément aux normes et
- dans lequel le multiplexeur sommateur (4) aussi comme le démultiplexeur d'accès au réseau (4B, 4C, 4D) peut être configuré et/ou diagnostiqué à distance à l'aide d'un dispositif de commande (5),
**caractérisé en ce qu'**un nouveau signal sommaire est généré, étant composé des données de l'encodeur original et des données de signalisation et celui est mené aux unités étant connectées après le multiplexeur sommateur (4A).

2. Procédé selon revendication 1, **caractérisé en ce que** les multiplexeurs d'accès au réseau (1B, 2B, 3B) et les encodeurs (1A, 2A, 3A) pour des signaux audio étant positionnés dans les systèmes de transmission d'informations étant respectivement configurable et/ou diagnosticable à distance à l'aide d'un dispositif de commande par des canaux de retour du système de transmission d'informations, étant guidé par les démultiplexeurs d'accès de réseau (4B, 4C, 4D).

3. Procédé selon revendication 1 ou 2, **caractérisé en ce que** les signaux multiplexes d'accès au réseau sont des signaux RNIS, des signaux X.21 et des signaux 2 Mbit/s (selon ITU-T Rec. G.703/G704) avec une propre structure multiplexe en fonction du type de signal.

4. Procédé selon revendication 3, **caractérisé en ce que** les démultiplexeurs d'accès au réseau (4B, 4C, 4D) reçoivent, démultiplexage et mènent ces différents signaux étant respectivement des signaux digitaux aux 2Mbit/s multiplexeur sommateur (4A) étant connecté après.

5. Procédé selon revendication 2, **caractérisé en ce que** les signaux multiplexes du multiplexeur d'accès au réseau (1B, 2B, 3B) contiennent outre des données audio codés aussi des données de signalisation par le réglage d'encodeur (1A, 2A, 3A) et des données de synchronisation pour des réseaux de transmission d'informations suivant des normes différentes, lesquelles sont analysées par les démultiplexeurs d'accès au réseau (4B, 4C, 4D).

6. Procédé selon revendication 5, **caractérisé en ce que** aux données d'encodeur (1A, 2A, 3A) sont ajoutées des données d'encodeur de signalisation rafraîchies dans le B, 4C, 4D) en fonction d'analyse et sont menées par un bus (B) au 2 Mbit/s multiplexeur sommateur (4A).

7. Procédé selon revendication 6, **caractérisé en ce que** le 2 Mbit/s multiplexeur sommateur (4A) complète les signaux de données à une information de signalisation nouvellement générée contenant la nouvelle structure multiplexe et les données de signalisation des réglages d'encodeur (1A, 2A, 3A) et que le signal de sortie du 2 Mbit/s multiplexeur sommateur (4A) est transmis par des réseaux de transmission d'informations publiques et standardisés.

8. Procédé selon revendication 3, **caractérisé en ce que** les démultiplexeurs d'accès au réseau (4B, 4C, 4D) sont actifs en permanence et surveillent les câbles de RNIS, de X.21 et de 2Mbit/s et s'ils tombent en panne ils mettent en marche automatiquement des connexions de secours par des RNIS-câbles.

9. Procédé selon revendication 1, **caractérisé en ce que** le dispositif de commande (5) transmet des information de commande jusqu'aux encodeurs (1A, 2A, 3A) pour la création de différentes trames de données pour un signal de sortie audio codé.

10. Dispositif de réception et de dérivation des signaux audio à la transition de réseaux entre des systèmes de transmission d'informations synchrones, de même type mais de différents standards avec
- au moins un encodeur (1A, 2A, 3A) réduisant les données où on peut connecter une source audio,
- un multiplexeur d'accès au réseau (1B, 2B, 3B) avec lequel les données d'encodeur à la sortie de l'encodeur (1A, 2A, 3A) peuvent être menées à un réseau publique de transmission d'informations,
- au moins un démultiplexeur d'accès au réseau (4B, 4C, 4D) étant connecté au réseau publique de transmission d'informations,
- un 2 Mbit/s-multiplexeur sommateur (4A) étant connecté au démultiplexeur d'accès au réseau (4B, 4C, 4D) pour générer un nouveau débit de données provenant des données complétées par des informations complémentaires du multiplexeur d'accès au réseau (1B, 2B, 3B) et d'un dispositif de commande (5), étant connecté à un 2 Mbit/s-multiplexeur sommateur (4A) pour le réglage de mode de fonctionnement d'un système de jonction audio flexible,
**caractérisé en** se que le 2 Mbit/s-multiplexeur sommateur (4 A) génère un nouveau signal sommaire, étant composé des données originales d'encodeur et les données de signalisation, et lequel est mené aux unités, étant connectées au 2 Mbit/s-multiplexeur sommateur (4A).

11. Dispositif selon revendication 10, **caractérisé en ce que** les démultiplexeurs d'accès au réseau (4B, 4C, 4 D) sont connectés au 2 Mbit/s-multiplexeur sommateur (4A) par le bus (B) et que les multiplexeurs d'accès au réseau (1B, 2B, 3B) et le démultiplexeur d'accès au réseau (4B, 4C, 4D) sont en plus équipés avec des modules RNIS pour la connexion de secours.

12. Dispositif selon revendication 10, **caractérisé en ce que** le 2 Mbit/s multiplexeur sommateur (4A) peut être configuré et diagnostiqué par le dispositif de commande (5) étant connecté au 2 Mbit/s-multiplexeur sommateur (4A).

13. Dispositif selon un ou plusieurs des revendications 10 jusqu'à 12, **caractérisé en ce que** les multiplexeurs d'accès au réseau (1B, 2B, 3B) et les encodeurs (1A, 2A, 3A) peuvent être configurés et diagnostiqués à distance par la voie de communication de 2 Mbit/s-multiplexeur sommateur (4A), le bus (B), le démultiplexeur d'accès au réseau (4B, 4C, 4D) et les canaux de retour des réseaux de transmission d'informations publiques.
